Europäisches Patentamt

European Patent Office

Office européen des brevets

(11) Numéro de publication: **0 402 184**
**A1**

## (12) DEMANDE DE BREVET EUROPEEN

(21) Numéro de dépôt: **90401195.4**

(51) Int. Cl.5: **G02B 27/02, G09B 27/00**

(22) Date de dépôt: **04.05.90**

(30) Priorité: **05.05.89 FR 8905996**

(43) Date de publication de la demande:
**12.12.90 Bulletin 90/50**

(84) Etats contractants désignés:
**DE ES GB IT**

(71) Demandeur: **SCULPTURES-JEUX**
**18 Rue Domat**
**F-75005 Paris(FR)**

(72) Inventeur: **Vuarnesson, Bernard**
**18, rue Domat**
**F-75005 Paris(FR)**

(54) **Appareil pour l'observation d'une représentation de la voûte céleste.**

(57) L'invention concerne un appareil pour l'observation d'une représentation de la voute céleste.

L'appareil comprend un tube (1) portant une couronne de graduations indiquant les dates des jours d'une année, un tube (2) portant une couronne de graduations indiquant les heures d'un jour et des moyens de montage pour effectuer dans ces tubes une représentation de la voute céleste et des moyens pour l'observation de cette représentation ainsi que des moyens de montage pour monter le premier et le deuxième tube en alignement avec possibilité de rotation relative des tubes, ces moyens de montage (3,8,7,9,10,1a,1b,2a,2b) permettant le démontage et le remontage, après un retournement de chaque tube (1,2) sur lui-même, et l'appareil comprenant deux représentations de la voute céleste respectivement pour l'hémisphère sud et pour l'hémisphère nord.

FIG. 2

L'invention concerne un appareil pour l'observation d'une représentation de la voute céleste.

On connaît un tel appareil qui comporte
- un premier tube portant sur sa face externe une couronne de graduations indiquant les dates des jours d'une année ;
- des moyens de montage pour monter transversalement, dans ce premier tube, une représentation de la voute céleste ;
- un deuxième tube portant sur sa face externe une couronne de graduations indiquant les heures d'un jour ;
- des moyens de montage pour monter dans ce deuxième tube, des moyens pour l'observation de ladite représentation ;
- des moyens de montage pour monter le premier et le deuxième tube en alignement avec possibilité de rotation relative d'un tube par rapport à l'autre.

Cet appareil présente l'inconvénient de ne pas être universel, en ce sens qu'il est conçu soit uniquement pour l'observation d'une représentation de la voute céleste visible dans l'hémisphère sud soit uniquement pour l'observation d'une représentation de la voute céleste visible dans l'hémisphère nord.

La présente invention a pour objet un appareil universel qui permette, au choix de l'utilisateur, de réaliser l'une ou l'autre de ces observations.

On y parvient, selon l'invention, par le fait que les moyens de montage permettent le démontage et le remontage, après un retournement de chaque tube sur lui-même, et par le fait que l'appareil comprend deux représentations de la voute céleste, respectivement pour l'hémisphère sud et pour l'hémisphère nord.

On décrira ci-après un exemple de réalisation de l'appareil de l'invention, en référence aux figures du dessin joint sur lequel :

    - la figure 1 est une perspective de l'appareil,

    - la figure 2 est une coupe axiale de l'appareil, et

    - la figure 3 est un schéma d'un ensemble de pièces non montées aptes à être assemblées pour constituer l'appareil de l'invention.

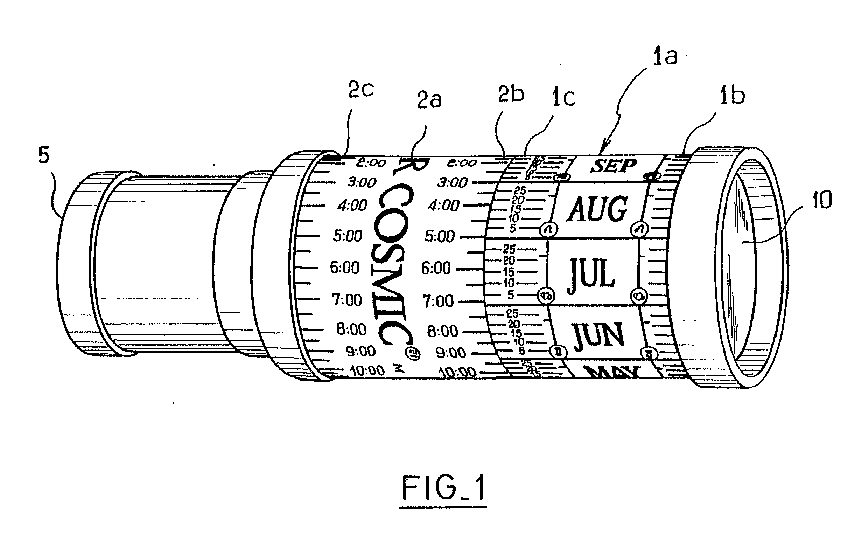

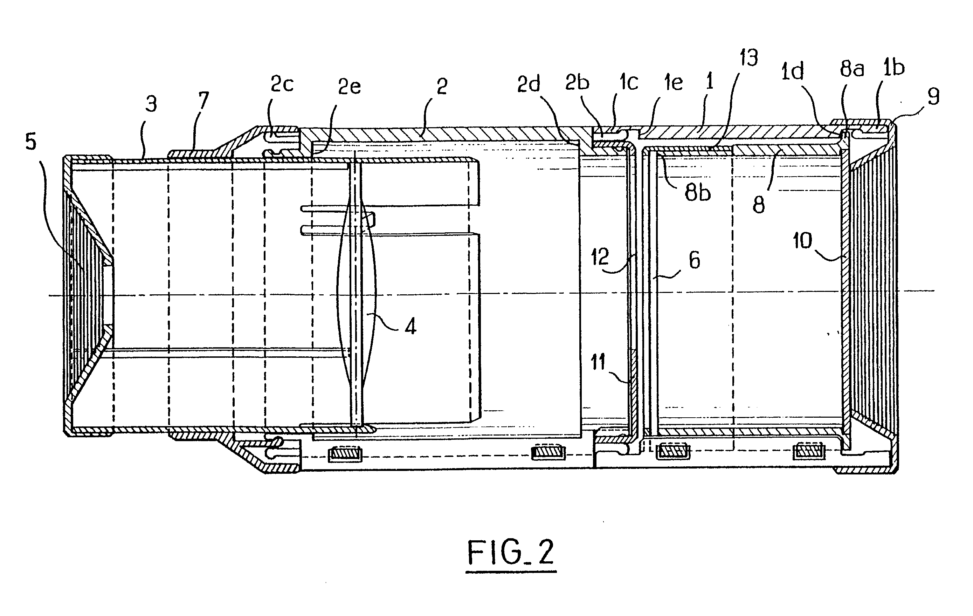

L'appareil représenté comprend (figures 1,2) :
- un premier tube 1, à section droite circulaire (ou, en variante, polygonale) qui porte sur sa face externe 1a, une échelle périphérique graduée en jours. En fait, dans cet exemple et pour des raisons de lisibilité, cette échelle est graduée de 5 jours en 5 jours. L'échelle est représentée à chacune des extrémités 1b,1c du tube pour être utilisable dans chacune des deux positions possibles du tube (voir plus loin). Les deux extrémités 1b,1c du tube sont identiques et sont amincies pour former, à partir d'un rebord interne 1d,1e, un bord en languettes.
- un deuxième tube 2, à section droite circulaire (ou, en variante, polygonale) qui porte sur sa face externe 2a, une échelle périphérique graduée en heures. L'échelle est représentée à chacune des extrémités 2b,2c du tube pour être utilisable dans chacune des deux positions possibles du tube (voir plus loin). Les deux extrémités du tube sont identiques et son amincies pour former, à partir d'un rebord interne 2d,2e, un bord en languette(s) apte à coopérer par emboîtement réciproque avec le bord en languettes contigu du premier tube 1.

L'invention n'est pas limitée à un moyen particulier pour permettre le montage des deux tubes en alignement avec possibilité de rotation relative. Par exemple, en variante, on utilise un manchon extérieur qui reçoit à emboîtement les extrémités des tubes 1,2 ou un fourreau intérieur sur lequel ces extrémités sont emmanchées.

Dans le tube 2 est enfilé un fourreau cylindrique 3 (figure 2) qui est emmanché à frottement dans celle 2c des extrémités du tube 2 qui est éloignée du tube 1 et dans lequel est monté un groupe de lentilles 4 et un oculaire 5. Ce cylindre peut coulisser dans le tube pour réaliser la mise au point sur un disque 6 qui porte une carte du ciel et qui est monté dans l'autre tube 1. La tenue du fourreau 3 est renforcée par une bague 7 qui frotte sur le fourreau et qui est emmanchée sur l'extrémité 2c du tube 2. Le disque 6 est monté dans le tube 1 au moyen d'un fourreau cylindrique 8 dans lequel le disque est fixé transversalement, par exemple par coincement entre une extrémité 8b du fourreau et une bague 13. Le disque 6 est par exemple une diapositive représentant la carte du ciel. Le fourreau 8 peut coulisser à frottement dans le tube 1 jusqu'à butée d'une colerette 8a du fourreau contre le rebord interne 1d formé dans le tube 1 à la base des languettes, (figure 2).

A son extrémité libre, le tube 1 est coiffé d'une bague 9 qui porte une paroi transversale dépolie 10.

Enfin, l'appareil comporte une bague 11 qui est emmanchée dans le tube 2 jusqu'à buter contre le rebord interne formé à la base des languettes. Pour renforcer l'emmanchement, l'extrémité du tube comporte un double système de languettes. Cette bague porte une paroi transversale munie d'une ouverture 12 choisie pour limiter le champ de vision en fonction de la latitude du lieu supposé d'observation.

L'appareil représenté sur les figures 1,2 convient pour l'observations dans un hémisphère. Pour l'observation dans l'autre hémisphère, il suffit, après démontage des fourreaux 3,8 et des bagues 7,9,10 de retourner les tubes 1,2 tête-bêche puis de remonter les bagues et les fourreaux après avoir changé la carte du ciel.

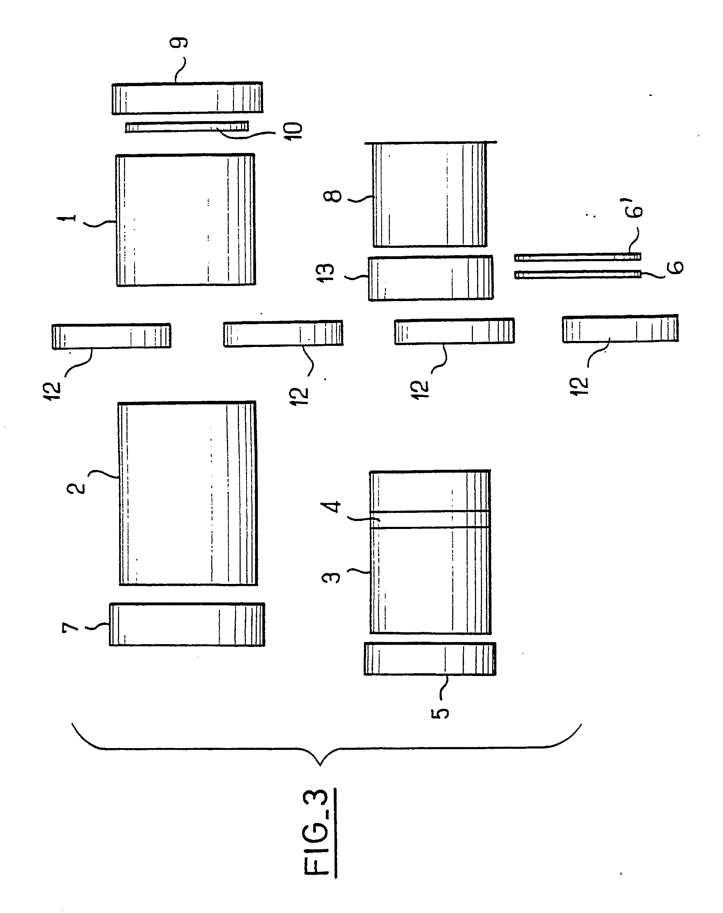

Dans la pratique, il est notamment prévu, selon l'invention, de fournir l'appareil en "kit" à l'état totalement ou partiellement démonté. Typiquement, un ensemble démonté comprend les pièces suivantes (figure 3) :
- un tube 1,
- un tube 2,
- un fourreau 3 muni des lentilles 4,
- un oculaire 5
- une bague 7
- un fourreau 8,
- deux cartes 6 et 6' (représentant respectivement une carte du ciel vu dans l'hémisphère sud et une carte du ciel vu dans l'hémisphère nord,
- une bague 13,
- une bague 9 avec une paroi dépolie 10,
- un jeu de bagues 11 correspondant à différentes latitudes.

Certaines des pièces peuvent elles-mêmes être démontées ou au contraire pré-assemblées, selon les desiderata.

Sur la figure 3, qui est un simple schéma, les proportions relatives des pièces ne correspondent pas nécessairement à la réalité.

L'invention n'est pas limitée aux réalisations qui ont été décrites.

**Revendications**

**1.** Appareil pour l'observation d'une représentation de la voute céleste, qui comporte
- un premier tube portant sur sa face externe une couronne de graduations indiquant les dates des jours d'une année ;
- des moyens de montage pour monter transversalement, dans ce premier tube, une représentation de la voute céleste ;
- un deuxième tube portant sur sa face externe une couronne de graduations indiquant les heures d'un jour ;
- des moyens de montage pour monter dans ce deuxième tube, des moyens pour l'observation de ladite représentation ;
- des moyens de montage pour monter le premier et le deuxième tube en alignement avec possibilité de rotation relative d'un tube par rapport à l'autre, caractérisé en ce que lesdits moyens de montage (3,8,7,9,10,1a,1b,2a,2b) permettent le démontage et le remontage, après un retournement de chaque tube (1,2) sur lui-même, et en ce que l'appareil comprend deux représentations (6,6') de la voute céleste, respectivement pour des lieux d'utilisation dans l'hémisphère sud et dans l'hémisphère nord.

**2.** Appareil selon la revendication 1, caractérisé en ce que les tubes (1,2) ont une section droite cylindrique.

**3.** Appareil selon la revendication 1, caractérisé en ce que les tubes (1,2) ont une section droite polygonale.

**4.** Appareil selon la revendication 1 ou 2, caractérisé en ce que lesdits moyens de montage comprennent un fourreau (3) qui porte un oculaire (5) et des lentilles transversales (4) et qui est monté à coulisse dans ledit deuxième tube (2).

**5.** Appareil selon l'une des revendications 1 à 3, caractérisé en ce que lesdits moyens de montage comprennent un fourreau (8) qui porte ladite représentation (6) et qui est emmanché dans ledit premier tube (1).

**6.** Appareil selon l'une des revendications 1 à 4, caractérisé en ce que lesdits troisièmes moyens de montage comprennent une conformation des extrémités (1a,1b;2a,2b) des tubes en sorte qu'une extrémité quelconque d'un tube peut être emboîtée dans l'une quelconque des extrémités de l'autre tube.

**7.** Appareil selon l'une des revendications 1 à 5, caractérisé en ce que ladite représentation (6) est transparente ou translucide et en ce que des moyens de montage démontables (9) sont prévus pour monter une paroi dépolie (10) à l'une quelconque des extrémités du premier tube (1).

**8.** Appareil selon l'une des revendications 1 à 7, caractérisé en ce qu'il comporte une bague (11) percée d'un orifice (12) permettant de limiter la vision de la carte du ciel en correspondance d'une latitude, apte à être montée à l'une quelconque des extrémités dudit deuxième tube (2).

**9.** Appareil selon l'une des revendications 1 à 8, caractérisé en ce qu'il est fourni au moins à l'état partiellement démonté et comprend deux cartes du ciel (6,6') et un jeu de plusieurs bagues (11) correspondant à différentes latitudes.

FIG_1

EP 0 402 184 A1

FIG_2

EP 0 402 184 A1

FIG_3

7 2 12 1 9 10

5 3 4 12 13 8

12 12 6' 6

EP 0 402 184 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 586 829 (B. VUARNESSON) <br> * Page 1, lignes 1,2,8,9; page 2, lignes 7-36; figures 1,2,4,6 * <br> --- | 1-9 | G 02 B 27/02 <br> G 09 B 27/00 |
| A | EP-A-0 291 402 (SCULPTURES JEUX) <br> * Figure 4; revendications 12,13,14 * <br> --- | 1-9 | |
| A | FR-A-2 600 429 (S. CHALOIN) <br> * Figures; revendications * <br> --- | 1,5 | |
| A | US-A-2 994 971 (D. MEISENHEIMER) <br> * Figure 12; revendications * <br> ----- | 1 | |

DOMAINES TECHNIQUES
RECHERCHES (Int. Cl.5)

G 02 B
G 09 B

Le présent rapport a été établi pour toutes les revendications

| Lieu de la recherche | Date d'achèvement de la recherche | Examinateur |
|---|---|---|
| LA HAYE | 21-09-1990 | PFAHLER R. |

EPO FORM 1503 03.82 (P0402)